# EUROPEAN PATENT SPECIFICATION

(11) **EP 1 979 882 B1**
(45) Date of publication and mention of the grant of the patent: **26.02.2020**
(21) Application number: 07700267.3
(22) Date of filing: 03.01.2007
(51) Int. Cl.: G08B 17/00, F24C 7/08, F24C 15/20

(54) **RANGE HOOD WITH ALARM DEVICE**
DUNSTABZUGSHAUBE MIT ALARMVORRICHTUNG
UNE HOTTE AVEC UN DISPOSITIF D'ALERTE

(30) Priority: 20.01.2006 FI 20060053
(43) Date of publication of application: 15.10.2008
(73) Proprietor: Innohome Oy, 02600 Espoo (FI)
(72) Inventor: MYLLYMÄKI, Matti, 02600 Espoo (FI)
(74) Representative: Boco IP Oy Ab
(86) International application number: PCT/FI2007/050002
(87) International publication number: WO 2007/082993

(56) References cited:
- EP-A1- 1 258 687
- WO-A1-86/00179
- WO-A1-03/074940
- DE-A1- 3 039 246
- DE-A1- 3 141 376
- DE-A1-102006 041 581
- GB-A- 2 185 161
- JP-A- 09 280 619
- JP-A- 2003 130 366
- US-A- 3 277 458
- US-A- 3 690 245
- US-A- 4 050 291
- US-A- 5 196 830
- US-A1- 2005 229 918

## Description

The invention relates to a range hood with alarm device, which signals if the plate of a gas or electric range is left on at idle or if the grease filter of a range hood needs cleaning. The alarm device comprises at least one temperature sensor and identification electronics, which identifies a sensor message and on that basis effects the activation of an alarm or a control output.

Almost 30% of electrical fires are caused by a kitchen range and the risk of flue and house fires is significantly increased by excessive dirtiness of a grease filter in the range hood.

A majority of kitchen range fires are caused by misuses, the most typical of which is forgetting the plate or switching it on inadvertently. Typical problem groups are elderly users, as well as children and pets. Elderly users tend to forget the range on and children as well as pets turn the range plate inadvertently on. Judging the dirtiness of a range hood's grease filter is awkward and in many cases it is washed too infrequently, thus increasing the risk of flue fire and impairing the quality of indoor air by being unable to exhaust cooking fumes.

There are prior known tracking and alarm devices operable in association with a kitchen range, which set off an alarm when the range temperature rises to a sufficient height, exceeding a set limit temperature, and switch the range off automatically. Prior known are also timers, which adjust themselves according to the output of a range and which disconnect the range from power supplies when any of the plates is left on at a high output for an excessively long time. The features of the preamble of claim 1 are known from WO 86/00179 A1.

A problem with these prior known solutions is that the response times thereof are excessively long when a plate is left on at idle or that the timers, which adjust themselves according to output, disconnect power supplies too quickly when a large amount of food is being prepared. As a result of an excessively slow response, there is often enough time for the user to leave the site before an alarm is given. Also possible obstacles, such as a hand or dirt between the sensor and the area under surveillance, may deny or delay an alarm. Ambient temperature may also have an effect on the activation of an alarm in some appliances. Solutions involving the use of an infrared detector and output measuring are generally only suitable for use in association with electric ranges although gas stoves are more common worldwide. Another thing missing from the marketplace is an alarm for the dirtiness of a range hood's grease filter, which would enable well-timed cleaning and thereby a minimization of risks. Nearly all commercially available devices call for a skilled fitter, whereby the purchase price may be even doubled. The price of a monitoring device may become higher than the price of a new kitchen range.

It is an object of the invention to provide a range hood with an alarm device, whereby the foregoing problems can be avoided and which is substantially less expensive than prior art devices. This object is accomplished by the invention in such a way that the device comprises at least two temperature sensors, which have substantially dissimilar contacts with the radiation heat of a range, and that the identification electronics identifies a rate of change in the temperature difference between the sensors and effects the activation of an alarm or a control output as the rates of change in temperature difference and the rate of change in a temperature difference exceeds or exceed a given value. An alarm device of the invention reminds the user of a left-on gas or electric range plate and an excessively soiled grease filter of the range hood. The solution enables a very rapid identification and alarm in such case that a presently vacant plate of a gas or electric range has been left on, whereby there is not enough time for the user to leave the site, nor is there enough time for the actual overheating to even occur. In the best case, the solution produces an alarm in less than a few minutes, yet allows for a normal operation of the range without restrictions.

The invention can be simply implemented by a range hood with an alarm capable of being attached to a range hood by means of magnets, thus enabling indication of rapid changes in temperatures conducted to the range hood and exceptional situations. A solution based on a rapid change of temperature according to the invention measures a rate of change in this temperature difference, thus enabling the identification of not only a left-on range plate but also an excessively soiled grease filter. The change in temperature is rapid whenever a range plate has been left on or switched on at idle. A rapid change results from the fact that the temperature rises quickly when the range plate is vacant or if a heat-absorbing cooking vessel with its contents is removed from the range. A respective rapid change does not take place in the process of preparing food, the food and the vessel heating up slowly. There is a wide temperature difference between the inside and outside of a range hood and the temperature difference experiences rapid changes if the grease filter is excessively dirty, because a soiled grease filter functions as a barrier and impedes the transfer of heat inside the range hood. The interior of a range hood and the cooking area warm up slowly at an almost equal rate when the plate has on top a cooking vessel of food or the grease filter is adequately clean, but the consequence of a vacant switched-on plate or a dirty grease filter is that the vicinity of a range, which is in a direct radiation contact with the range plates, heats up more rapidly than the interior of the range hood. The rather small and rapid change occurring in temperature or in a difference between temperatures is readily and quickly identifiable when a cooking vessel is removed from the range and the plate is inadvertently left on or when cooking is started and the grease filter is sufficiently dirty. The indication of rates of change in temperatures or a difference between temperatures or a rate of change in a temperature difference does not call for the overheating of a range plate, whereby the alerting occurs in less time and at lower temperatures than in prior known solutions which are based merely on overstepping a high maximum temperature. In a solution of the invention, the identification sensitivity is not impaired by ambient temperature and slow changes occurring therein as opposed to traditional solutions, by virtue of which the alerting occurs very quickly as well as reliably. If desired, the alarm control relay can be used for controlling also a range hood and a range. In an alarm situation, it is thus possible to switch off the range hood and the supply of power or gas to the range, and in the best case to prevent overheating of the range and a possible flue fire.

In terms of technical design, the invention is based on a battery-operated or external voltage-feed operated alarm unit, which is mountable on the surface or in the interior of a range hood and which is provided with temperature sensors for measuring the internal and/or external temperature of the range hood. When measuring both external and internal temperature, the unit present inside a range hood is either in wired or wireless communication with a separate unit, which is present outside the range hood on its bottom surface and which is provided with a temperature sensor for measuring temperature external of the range hood. The unit measuring external temperature can be very small and simple, thus being also easy to install and keep clean. By virtue of a simple design and magnet attachment, it can be fitted by anyone and the alarm unit inside the range hood is neither able to become soiled nor to overheat, thus working more reliably and not calling for extra cleaning. At its simplest, the measurement is based on reasonably priced NTC temperature sensors insensitive to dirt and visible flames, yet sensitive to the entire spectrum of thermal radiation. When using NTC sensors, the device lends itself equally well to applications involving gas stoves as well as electric ranges and enables a highly durable battery-operated implementation. The measurement of a rate of change in temperature can also be effected by using a prior known IR measurement.

The invention will now be described in detail with reference to the accompanying drawing, in which:

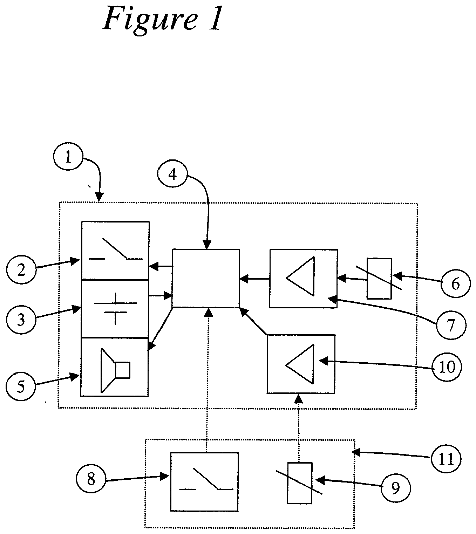

Fig. 1 shows a structural block diagram for an accessory of the invention.

Fig. 1 depicts a block diagram for an alarm, which is used for tracking the internal and external temperatures of a range hood and which is based on per se known technology, comprising a unit 1 to be placed inside the range hood and a unit 11 to be placed outside the range hood, the latter being linked either in a wired or wireless manner to the unit present inside. The unit 1 to be placed inside is provided with a voltage source 3 and identification and control electronics 4 based on a microprocessor or a control logic. The unit 1 measures the internal temperature of a range hood by means of a sensor 6, which has its signal intensified in an amplifier 6 for a mode appropriate for the identification and control electronics 4. The second unit 11, which is mounted on the bottom surface of a range hood, measures temperature external of the range hood by means of a measuring sensor 9 which is linked to an amplifier 10 of the unit 1 and intensified for a mode appropriate for the identification and control electronics 4. The prior art based electronics 4 compares the internal 6 as well as the external 9 temperatures of the range hood and, upon detecting a sufficiently rapid and/or large change, it activates an alarm sound signal 5 and, if necessary, has an external control relay 2 energized. The alarm sound signal 5 can be switched off by a push button 8 included in the unit present outside the range hood. The push button 8 can also be used for programming a desired temperature difference or rate of change in the temperature difference in the memory of the control electronics by simulating an alarm condition, whereby the device can be readily adapted to various operating conditions. Another optional configuration of the alarm, which is not part of the invention, can be such that the alarm unit 1 resides outside a range hood and the alarm has its temperature sensors 6, 9 in two separate units 1, 11, one inside its unit and the other outside its unit. What is essential is that the contacts (interactions or relations) thereof with the radiation heat of a range are substantially dissimilar to each other. An alarm fitted with two sensors can be designed as integrated with a range hood.

## Claims

1. A range hood and an alarm device (1, 11) configured to identify if the plate of a gas or electric range is on with a vacant plate or if the grease filter of the range hood is excessively dirty, said alarm device comprising at least two temperature sensors (6, 9) configured to have substantially dissimilar contacts with the radiation heat of a range when mounted on a range hood, and identification electronics (4), which identifies a sensor message and on that basis effects the activation of an alarm, **characterized in that** that the alarm device comprises a first unit comprising one of the temperature sensors (6, 9), and a second unit comprising another of the temperature sensors (6, 9), wherein one of the first unit and the second unit is mounted on the bottom surface of the range hood and the other of the first unit and second unit is mounted in the interior of the range hood, and that the identification electronics (4) is configured to identify a rate of change in the temperature difference between the internal and external temperatures of the range hood measured by the sensors (6, 9) and to effect the activation of an alarm (5) as the rate of change in the temperature difference exceeds a given value.

2. The range hood and alarm device as set forth in claim 1, **characterized in that** the first (6) of the at least two temperature sensors is configured to be disposed so as to be shielded from a direct radiation contact with the plates of the range and the second (9) of the at least two temperature sensors is configured to be disposed in a direct radiation contact with the plates of the range.

3. The range hood and alarm device as set forth in any of claim 1 or 2, **characterized in that** the identification electronics (4) is configured to identify the rate of change in the temperature of at least one of the sensors (5, 6) and the temperature difference between the sensors (5, 6) and to effect the activation of an alarm as the temperature rate of change and the temperature difference exceed given values.

4. The range hood and alarm device as set forth in any of claims 1-3, **characterized in that** the alarm device capable of being connected with an external forwarding device or with control electronics for a range or the range hood or with an accessory capable of disconnecting power supplies to a range or range hood.

5. The range hood and alarm device as set forth in any of claims 1-4, **characterized in that** the identification electronics (4) comprises a microprocessor, provided with a program which is configured to learn normal operating conditions and thereby to adapt itself to various makes of equipment and conditions for effecting an alarm in exceptional situations, and that the alarm device includes a push button (8) which is arranged to switch off the alarm sound signal and which is adapted for programming a desired rate of change in the temperature difference by simulating an alarm condition.

6. The range hood and alarm device as set forth in any of claims 1-5, **characterized in that** the alarm device is present as integrated with the range hood and coupled to control the operation of the range hood or the range.

7. The range hood and alarm device as set forth in any of claims 1-5, **characterized in that** the first unit and second unit are attachable to the operating positions thereof by means of a magnet.

8. The range hood and alarm device as set forth in any of claims 1-7, **characterized in that** the temperature sensors (6, 9) are NTC sensors.

## Patentansprüche

1. Herdhaube und Alarmvorrichtung (1, 11), die ausgelegt ist, um festzustellen, ob die Platte eines Gas- oder Elektroherds bei unbesetzter Platte eingeschaltet ist oder ob der Fettfilter der Herdhaube übermäßig verschmutzt ist, wobei die Alarmvorrichtung mindestens zwei Temperatursensoren (6, 9), die so ausgelegt sind, dass sie, wenn an einer Haube montiert, einen im Wesentlichen ungleichartigen Kontakt mit der Strahlungswärme eines Herdes aufweisen, und eine Feststellungselektronik (4), die eine Sensormeldung feststellt und auf dieser Grundlage die Aktivierung eines Alarms bewirkt, umfasst, **dadurch gekennzeichnet, dass** die Alarmvorrichtung eine erste Einheit, die einen der Temperatursensoren (6, 9) aufweist, und eine zweite Einheit, die einen anderen der Temperatursensoren (6, 9) aufweist, umfasst, wobei eine der ersten und zweiten Einheit an der Unterseite der Herdhaube montiert ist und die andere der ersten und zweiten Einheit im Inneren der Herdhaube montiert ist, und dass die Feststellungselektronik (4) ausgelegt ist, um eine Änderungsrate der Temperaturdifferenz zwischen der von den Sensoren (6, 9) gemessenen Innentemperatur und Außentemperatur festzustellen und die Aktivierung eines Alarms (5) zu bewirken, wenn die Änderungsrate der Temperaturdifferenz einen gegebenen Wert überschreitet.

2. Herdhaube und Alarmvorrichtung nach Anspruch 1, **dadurch gekennzeichnet, dass** der erste (6) der mindestens zwei Temperatursensoren ausgelegt ist, um so angeordnet zu werden, dass er vor einem direkten Strahlungskontakt mit den Platten des Herds abgeschirmt ist, und der zweite (9) der mindestens zwei Temperatursensoren ausgelegt ist, um in direktem Strahlungskontakt mit den Platten des Herds angeordnet zu werden.

3. Herdhaube und Alarmvorrichtung nach einem der Ansprüche 1 oder 2, **dadurch gekennzeichnet, dass** die Feststellungselektronik (4) ausgelegt ist, um die Änderungsrate der Temperatur von mindestens einem der Sensoren (5, 6) und die Temperaturdifferenz zwischen den Sensoren (5, 6) festzustellen und um die Aktivierung eines Alarms zu bewirken, wenn die Temperaturänderungsrate und die Temperaturdifferenz gegebene Werte überschreiten.

4. Herdhaube und Alarmvorrichtung nach einem der Ansprüche 1 bis 3, **dadurch gekennzeichnet, dass** die Alarmvorrichtung in der Lage ist, mit einer externen Weiterleitungsvorrichtung oder mit einer Steuerelektronik für einen Herd oder die Herdhaube oder mit einem Zubehör, das in der Lage ist, die Stromversorgung zu einem Herd oder einer Herdhaube zu unterbrechen, verbunden zu werden.

5. Herdhaube und Alarmvorrichtung nach einem der Ansprüche 1 bis 4, **dadurch gekennzeichnet, dass** die Feststellungselektronik (4) einen Mikroprozessor umfasst, der mit einem Programm versehen ist, das dazu ausgelegt ist, normale Betriebsbedingungen zu erlernen und sich dadurch an verschiedene Gerätefabrikate und Bedingungen anzupassen, um in Ausnahmesituationen einen Alarm zu bewirken, und dass die Alarmvorrichtung einen Drucktaster (8) aufweist, der so angeordnet ist, dass er das akustische Alarmsignal ausschaltet, und der eingerichtet ist zum Programmieren einer gewünschten Änderungsrate der Temperaturdifferenz durch Simulation einer Alarmbedingung.

6. Herdhaube und Alarmvorrichtung nach einem der Ansprüche 1 bis 5, **dadurch gekennzeichnet, dass** die Alarmvorrichtung in der Herdhaube integriert vorliegt und so gekoppelt ist, dass sie den Betrieb der Herdhaube oder des Herdes steuert.

7. Herdhaube und Alarmvorrichtung nach einem der Ansprüche 1 bis 5, **dadurch gekennzeichnet, dass** die erste Einheit und die zweite Einheit mittels eines Magneten an ihren Betriebspositionen anbringbar sind.

8. Herdhaube und Alarmvorrichtung nach einem der Ansprüche 1 bis 7, **dadurch gekennzeichnet, dass** die Temperatursensoren (6, 9) NTC-Sensoren sind.

## Revendications

1. Hotte de cuisinière et dispositif avertisseur (1, 11) configuré pour identifier si la plaque d'une cuisinière à gaz ou électrique est allumée avec une plaque inoccupée ou si le filtre à graisse de la hotte de cuisinière est excessivement sale, ledit dispositif avertisseur comprenant au moins deux capteurs de température (6, 9) configurés pour avoir des contacts essentiellement différents à la chaleur rayonnante d'une cuisinière lorsqu'ils sont montés sur une hotte de cuisinière, et un système d'identification électronique (4) qui identifie un message du capteur et, sur cette base, effectue l'activation d'une alerte, **caractérisés en ce que** le dispositif avertisseur comprend une première unité comprenant l'un des capteurs de température (6, 9) et une deuxième unité comprenant l'autre des capteurs de température (6, 9), l'une des première et deuxième unités étant montée sur la face inférieure de la hotte de cuisinière et l'autre des première et deuxième unités étant montée à l'intérieur de la hotte de cuisinière, et que le système d'identification électronique (4) est configuré pour identifier un taux de variation de la différence de température entre les températures intérieure et extérieure de la hotte de cuisinière mesurées par les capteurs (6, 9) et pour effectuer l'activation d'une alerte (5) lorsque le taux de variation de la différence de température dépasse une valeur donnée.

2. Hotte de cuisinière et dispositif avertisseur selon la revendication 1, **caractérisés en ce que** le premier (6) desdits au moins deux capteurs de température est configuré pour être disposé de manière à être protégé contre un contact direct au rayonnement des plaques de la cuisinière et le deuxième (9) desdits au moins deux capteurs de température est configuré pour être disposé en contact direct au rayonnement des plaques de la cuisinière.

3. Hotte de cuisinière et dispositif avertisseur selon l'une des revendications 1 ou 2, **caractérisés en ce que** le système d'identification électronique (4) est configuré pour identifier le taux de variation de la température d'au moins l'un des capteurs (5, 6) et la différence de température entre les capteurs (5, 6), et pour effectuer l'activation d'une alerte lorsque le taux de variation de la température et la différence de température dépassent des valeurs données.

4. Hotte de cuisinière et dispositif avertisseur selon l'une des revendications 1 à 3, **caractérisés en ce que** le dispositif avertisseur est capable d'être relié à un dispositif de relayage externe ou à un système de contrôle électronique pour une cuisinière ou la hotte de cuisinière, ou à un accessoire capable de couper les alimentations électriques d'une cuisinière ou d'une hotte de cuisinière.

5. Hotte de cuisinière et dispositif avertisseur selon l'une des revendications 1 à 4, **caractérisés en ce que** le système d'identification électronique (4) comprend un microprocesseur, pourvu d'un programme qui est configuré pour apprendre des conditions de fonctionnement normal et, par-là, s'adapter à des marques d'équipements et conditions différentes pour effectuer une alerte en des situations exceptionnelles, et que le dispositif avertisseur comprend un bouton-poussoir (8) qui est disposé de manière à éteindre le signal d'avertissement sonore et qui est adapté pour programmer un taux de variation désiré de la différence de température en simulant une condition d'alerte.

6. Hotte de cuisinière et dispositif avertisseur selon l'une des revendications 1 à 5, **caractérisés en ce que** le dispositif avertisseur est présent de manière intégrée à la hotte de cuisinière et couplé de manière à commander le fonctionnement de la hotte de cuisinière ou de la cuisinière.

7. Hotte de cuisinière et dispositif avertisseur selon l'une des revendications 1 à 5, **caractérisés en ce que** la première unité et la deuxième unité sont attachables à leurs positions de service au moyen d'un aimant.

8. Hotte de cuisinière et dispositif avertisseur selon l'une des revendications 1 à 7, **caractérisés en ce que** les capteurs de température (6, 9) sont des capteurs CTN.
